# DEMANDE DE BREVET EUROPEEN

(11) **EP 1 648 170 A1**
(43) Date de publication de la demande: **19.04.2006**
(21) Numéro de dépôt: 04105093.1
(22) Date de dépôt: 15.10.2004
(51) Int. Cl.: H04N 7/16

(54) **Méthode de transmission de messages de gestion par un centre de gestion à destination d'une pluralité d'unités multimédia**

(71) Demandeur: Nagracard S.A., 1033 Cheseaux-sur-Lausanne (CH)
(72) Inventeur: Duval, Grégory, 1093 La Conversion (CH); Cochard, Jimmy, 1616 Attalens (CH); Kudelski, Henri, 1091 Grandvaux (CH); Cagnard, Paul-Jean, 1004 Lausanne (CH); Hauert, Patrick, 1006 Lausanne (CH)
(74) Mandataire: Wenger, Joel-Théophile

(57) **Abrégé**

La présente invention concerne une méthode de transmission de messages de gestion par un centre de gestion (CG) à destination d'une pluralité d'unités multimédia. Chaque unité dispose d'un module de sécurité (SC) comprenant au moins une clé globale de chiffrement utilisée en relation avec un module de chiffrement. Cette méthode est caractérisée en ce qu'elle consiste à diviser l'ensemble des modules de sécurité au moins en deux groupes, un premier groupe (GR1) de module de sécurité disposant d'une première configuration des éléments de sécurité et un second groupe (GR2) de modules de sécurité disposant d'une seconde configuration des éléments de sécurité, la première configuration étant différente de la seconde configuration.

## Description

### DOMAINE TECHNIQUE

La présente invention concerne une méthode de transmission de messages de gestion par un centre de gestion à destination d'une pluralité d'unités multimédia.

### TECHNIQUE ANTERIEURE

Dans le domaine de la gestion de données à accès conditionnel, notamment dans le cadre de la télévision à péage, l'accès aux données est soumis à l'acquisition de droits. Ces droits sont envoyés dans des messages d'autorisation EMM. L'accès aux données est généralement soumis à l'obtention de clés, qui sont généralement des mots de contrôle cw, envoyés sous forme de messages de gestion ECM. La présence d'un droit pour chaque abonné et chaque événement est vérifiée au moyen d'un module de sécurité.

De façon bien connue de l'homme du métier, le module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

De par le développement de plus en plus important des systèmes de télévision à péage et du fait de l'augmentation du nombre d'abonnés à un même fournisseur de données, l'intérêt de craquer la sécurité d'un module de sécurité et par conséquent le risque que la sécurité soit réellement craquée est de plus en plus important. La connaissance des secrets contenus dans un module de sécurité permet de réaliser des modules falsifiés, ou modules clones, qui peuvent être commercialisés et qui permettent l'accès aux données sans devoir acquérir les droits correspondants. En effet, un module falsifié saute l'étape de vérification des droits effectuée dans un module conventionnel. Il effectue par contre le traitement des messages de gestion ECM de façon à en extraire les mots de contrôle et peut donc accéder aux données de la même manière qu'un module conventionnel.

Dans les systèmes de l'art antérieur, lorsque la sécurité du système a été craquée, il peut se révéler nécessaire, lorsque la quantité de modules clones en circulation devient trop importante et que des pertes financières conséquentes en résultent, de remplacer la totalité des modules de sécurité en service. Ceci nécessiter un temps très long et engendre des frais très importants.

### EXPOSE DE L'INVENTION

La présente invention se propose de pallier les inconvénients des dispositifs de l'art antérieur en réalisant un système et une méthode dans lesquels la connaissance des secrets d'un module de sécurité ne permet pas de connaître les secrets de tous les modules.

Ce but est atteint par une méthode de transmission de messages de gestion par un centre de gestion à destination d'une pluralité d'unités multimédia, chaque unité disposant d'un module de sécurité comprenant au moins une clé globale de chiffrement utilisée en relation avec un module de chiffrement, caractérisée en ce qu'elle consiste à diviser l'ensemble des modules de sécurité au moins en deux groupes, un premier groupe de module de sécurité disposant d'une première configuration des éléments de sécurité et un second groupe de modules de sécurité disposant d'une seconde configuration des éléments de sécurité, la première configuration étant différente de la seconde configuration.

Selon l'invention, il est proposé de diversifier les modules de sécurité sur le plan matériel, c'est-à-dire de disposer de modules de sécurité ayant des configurations initiales différentes. Ces configurations peuvent notamment être des clés globales spécifiques, des clés de longueur particulières, des modules ou des algorithmes d'encryption particuliers, des messages de formats différents,...

Grâce à ce système, lorsque la sécurité d'un module de sécurité a été craquée et que les clés sont donc connues, il est possible de ne remplacer que les modules appartenant au même groupe que le module craqué. Ainsi, seul une partie déterminée des modules de sécurité doit être remplacée.

### DESCRIPTION SOMMAIRE DES DESSINS

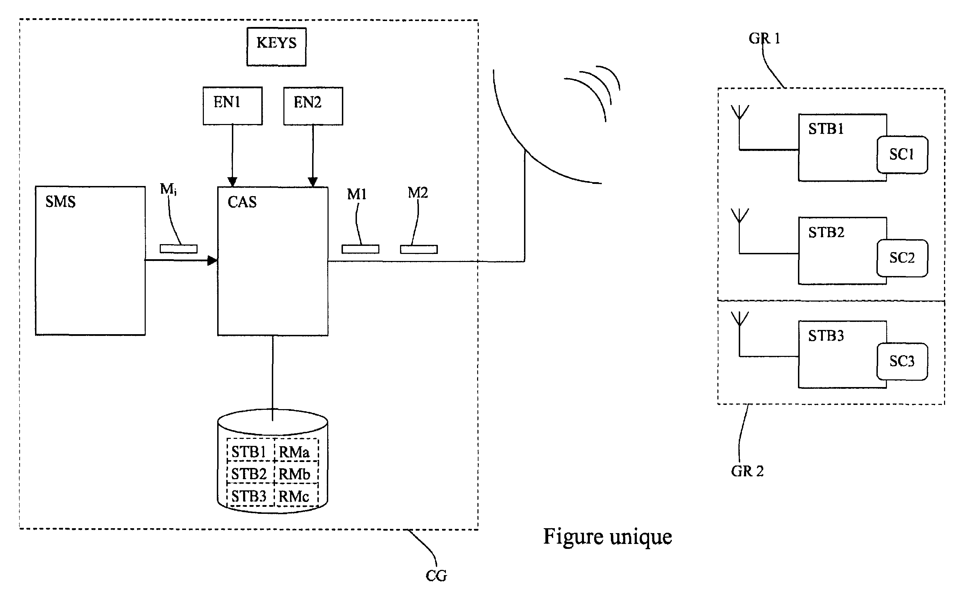

La présente invention et ses avantages seront mieux compris en référence à la figure annexée et à la description détaillée d'un mode de réalisation particulier, dans laquelle cette figure unique illustre schématiquement l'ensemble du système pour la mise en oeuvre de la méthode de l'invention.

### MANIERE(S) DE REALISER L'INVENTION

En référence à la figure, le système pour la mise en oeuvre de la méthode de l'invention comprend un centre de gestion CG en charge de gérer une pluralité d'unités multimédia, ces unités multimédia comportant un décodeur STB, un module de sécurité SC et des moyens de réception de messages.

De façon bien connue, le centre de gestion CG est en charge de l'envoi de messages d'autorisation EMM et de messages de gestion ECM notamment. Ces messages sont transmis par des moyens de transmission.

Dans l'exemple illustré, le centre de gestion gère trois unités multimédia réparties en deux groupes. En pratique, un centre de gestion peut être en charge de plusieurs centaines de millier d'unités multimédia, voire plusieurs millions. Selon l'invention, celles-ci peuvent être réparties en un nombre de groupes qui varie entre deux et une vingtaine environ. La limite supérieure n'est pas définie techniquement, mais un nombre de groupes trop important rend la gestion des messages difficile.

Les unités multimédia du premier groupe GR1 utilisent une configuration initiale différente de la configuration des unités du deuxième groupe GR2. Cette configuration peut être un ou plusieurs des éléments suivants :
- Clé globale, longueur de clé, module ou algorithme de chiffrement, format des messages.

De préférence, le niveau de sécurité de chacune des configurations est sensiblement équivalent.

A titre d'exemple, le procédé de l'invention est décrit en supposant que les clés globales sont différentes en contenu et en longueur.

Prenons le cas où le même message est envoyé aussi bien à certaines unités multimédia du premier groupe GR1 qu'à des unités multimédia du deuxième groupe GR2.

Pour chaque unité multimédia à laquelle le message doit être envoyé, le centre de gestion détermine, d'après une table mémorisée dans ce centre, quelle est la configuration initiale de l'unité multimédia concernée. Dans notre exemple, il va donc déterminer la clé globale à utiliser pour chaque unité multimédia. La clé globale en question est ensuite introduite dans un module de chiffrement correspondant EN, de façon à chiffrer les messages de gestion EMM.

Comme dans l'exemple considéré, deux clés globales différentes, de longueurs différentes sont utilisées dans deux modules de chiffrement différents, il est clair que le même message d'autorisation initial Mᵢ aboutira à deux messages chiffrés M1, M2 différents, dans leur contenu et également dans leur longueur. Il est à noter que les modules de chiffrement peuvent utiliser des algorithmes de chiffrement différents. Les messages résultant de ce traitement seront ensuite transmis aux unités multimédia concernées par les moyens de transmission.

Chaque groupe d'unité multimédia dispose de sa propre clé globale et de son propre module de déchiffrement utilisant un algorithme déterminé de sorte qu'une unité multimédia d'un groupe donné est en mesure de déchiffrer et de traiter un message qui est destiné à ce groupe alors qu'il ne sera pas capable de traiter un message destiné à un autre groupe.

Lorsque la sécurité d'un module de sécurité a été craquée et que des modules clones circulent pour un groupe donné, il est possible de faire parvenir aux abonnés disposant de ce type de modules, un nouveau module ayant une configuration initiale d'un autre groupe déjà existant ou une configuration initiale nouvelle, puis de ne plus utiliser la configuration du groupe contenant des modules clones. Ainsi, les abonnés ayant réellement des droits acquis en subissent pas de conséquences néfastes alors que les utilisateurs de modules clones ne peuvent plus accéder aux données.

Cette méthode présente comme avantage qu'il n'est pas nécessaire de remplacer la totalité des modules de sécurité lorsqu'un ou plusieurs clones sont détectés. Seul le groupe contenant les clones doit être remplacé. Cela simplifie de façon considérable les changements de modules et permet également de fortement diminuer les coûts liés à un tel changement. Ceci a également pour conséquence qu'il est intéressant de modifier la configuration d'un groupe dès qu'un nombre relativement faible de modules clones est détecté ou que l'on soupçonne l'existence d'un nombre de modules clones relativement faible.

## Revendications

1. Méthode de transmission de messages de gestion par un centre de gestion à destination d'une pluralité d'unités multimédia, chaque unité disposant d'un module de sécurité (SC) comprenant au moins une clé globale de chiffrement utilisée en relation avec un module de chiffrement, **caractérisée en ce qu'**elle consiste à diviser l'ensemble des modules de sécurité au moins en deux groupes (GR1, GR2), un premier groupe de module de sécurité disposant d'une première configuration des éléments de sécurité et un second groupe de modules de sécurité disposant d'une seconde configuration des éléments de sécurité, la première configuration étant différente de la seconde configuration.

2. Méthode de transmission de messages de gestion selon la revendication 1, **caractérisé en ce que** lesdites configurations ont des niveaux de sécurité équivalents.

3. Méthode de transmission de messages de gestion selon la revendication 1, **caractérisé en ce que** lesdites configurations sont définies par une clé globale spécifique.

4. Méthode de transmission de messages de gestion selon la revendication 1, **caractérisé en ce que** lesdites configurations sont définies par une clé de longueur spécifique.

5. Méthode de transmission de messages de gestion selon la revendication 1, **caractérisé en ce que** lesdites configurations sont définies par un algorithme de chiffrement spécifique.

6. Méthode de transmission de messages de gestion selon la revendication 1, **caractérisé en ce que** lesdites configurations sont définies par un format de messages spécifique.

7. Méthode de transmission de messages de gestion selon la revendication 1, **caractérisé en ce qu'**elle comprend une étape de détermination du groupe (GR1, GR2) auquel appartient l'unité multimédia à laquelle un message est transmis, une étape de détermination de la configuration de ce groupe, une étape de préparation d'un message de gestion en utilisant ladite configuration et une étape de transmission du message de gestion ainsi préparé.
